# EUROPEAN PATENT SPECIFICATION

(11) **EP 3 424 300 B1**
(45) Date of publication and mention of the grant of the patent: **04.08.2021**
(21) Application number: 18189938.6
(22) Date of filing: 14.06.2017
(51) Int. Cl.: A01G 17/08

(54) **BINDING MACHINE FOR GARDENING**
BINDEMASCHINE FÜR DEN GARTENBAU
MACHINE À LIER POUR LE JARDINAGE

(30) Priority: 15.06.2016 JP 2016119414
(43) Date of publication of application: 09.01.2019
(62) Divisional of application: 17176029.1
(73) Proprietor: MAX CO., LTD., Tokyo 103-8502 (JP)
(72) Inventor: TAKEMURA, Hajime, Tokyo 103-8502 (JP); ADACHI, Michiaki, Tokyo 103-8502 (JP); MANIWA, Yoshihiro, Tokyo 103-8502 (JP)
(74) Representative: Samson & Partner Patentanwälte mbB

(56) References cited:
- EP-A1- 1 840 031
- EP-A1- 2 926 649
- EP-A2- 0 969 951
- DE-A1- 2 316 215
- US-A1- 2005 198 840
- Christopher Dawber: "How to Change a Window Cleaning Scraper Blade - window cleaning tips", Youtube, 11 September 2011 (2011-09-11), page 1, XP054978922, Retrieved from the Internet: URL:https://www.youtube.com/watch?v=RGJcCz WzYGE [retrieved on 2018-11-30]
- Duratool: "Duratool Tapetool Operation", You Tube, 3 March 2016 (2016-03-03), page 1, XP054977842, Retrieved from the Internet: URL:https://www.youtube.com/watch?v=lbYEq0 qMV6o [retrieved on 2017-10-30]

## Description

### TECHNICAL FIELD

The present invention relates to a binding machine for gardening.

### BACKGROUND

Traditionally, binding machines for gardening are widely used when binding branches and vines of fruit trees, vegetables and the like into support pillars, or binding vegetables and bags, and the like. In the binding machine for gardening, a binding process is performed by a series of processes. That is, the tape is pulled out from the binding machine main body by the opening and closing operation of a clincher arm and the tape is stretched between the front end portions of the clincher arm and the binding machine main body, and in this state, the binding machine main body is pushed out forward to wind the tape around an object to be bound, and then, the clincher arm is closed again to bind the tape with a staple and to cut the tape with the cutting blade.

For example, a binding machine for gardening is disclosed in Japanese Unexamined Patent Application Publication (JP-A) No. 2003-341613 in which a notch blade-shaped cutter blade is attached to a front end portion of a driver handle (binding machine main body). Generally, the cutter blade is held by the driver handle by being sandwiched between a leaf spring provided on the driver handle and a sheet metal member. When exchanging the cutter blade, a user grasps the cutter blade with nose pliers or the like and draws it with a force greater than a spring force to pull out the cutter blade from the driver handle.

EP 2 926 649 A1 discloses a binding machine for gardening according to the features of the preamble of claim 1.

DE 23 16 215 A1 and EP 1 840 031 A1 disclose similar binding devices or binding machines for gardening. The Youtube video "Duratool Tapetool operation" dated 3 March 2016 discloses a similar device.

### SUMMARY

However, the binding machine for gardening disclosed in JP-A-2003-341613 has the following problems. That is, as described above, since the cutting blade is held by the binding machine main body in a simple manner, when stems or support pillars are erroneously pierced by the cutting blade at the time of binding, the cutting blade may come off from the binding machine main body. Further, since the cutting blade is sandwiched between the leaf spring and the sheet metal member, the cutting blade may hardly be held at an accurate position in some cases. In this case, there is a problem that the tape cannot be normally cut due to deviation of a cutting position.

While the invention is defined in the independent claims, further aspects of the invention are set forth in the dependent claims, the drawings and the following description.

Therefore, the invention has been made in view of the problem, and is to provide a binding machine for gardening that can prevent the cutting blade from unintentionally coming off during a binding operation and hold the cutting blade at an accurate position.

According to the invention, which is achieved with the appended claims, the blade for cutting the tape is fixed to the binding machine main body at a predetermined position by the lock mechanism, thereby preventing the cutting blade from coming off and attaching the cutting blade at the accurate position.

### BRIEF DESCRIPTION OF THE DRAWINGS

Fig. 1 is a perspective view illustrating an example of a configuration of a binding machine for gardening according to an embodiment of the invention;
Fig. 2 is a front view illustrating an example of the configuration of the binding machine for gardening;
Fig. 3 is a cross-sectional view illustrating an example of the configuration of the binding machine for gardening;
Fig. 4 is a cross-sectional view illustrating a state at the time of pulling out a tape in the binding machine for gardening;
Fig. 5 is a cross-sectional view illustrating a state at the time of cutting a tape in the binding machine for gardening;
Fig. 6 is a perspective view illustrating an example of a configuration of a tape cutting portion according to a first embodiment of the invention;
Fig. 7 is a cross-sectional view illustrating an example of the configuration of the tape cutting portion;
Figs. 8A and 8B are views illustrating examples of a configuration of a release button;
Fig. 9 is a view illustrating an example of a configuration of a cutting blade;
Figs. 10A and 10B are views illustrating an example of an operation of a lock mechanism depending on a pressed state of the release button;
Figs. 11A and 11B are views illustrating an example of an operation of the lock mechanism when the release button is not pressed;
Figs. 12A and 12B are views illustrating an example of an operation of the lock mechanism when the release button is pressed; and
Figs. 13A and 13B are perspective views illustrating examples of a configuration of a tape cutting portion according to a second embodiment which is not covered by the appended claims.

### DETAILED DESCRIPTION

Preferred embodiments of the present invention will be described in detail with reference to the accompanying drawings.

### <First Embodiment>

### [Configuration Example of Binding machine for gardening 100]

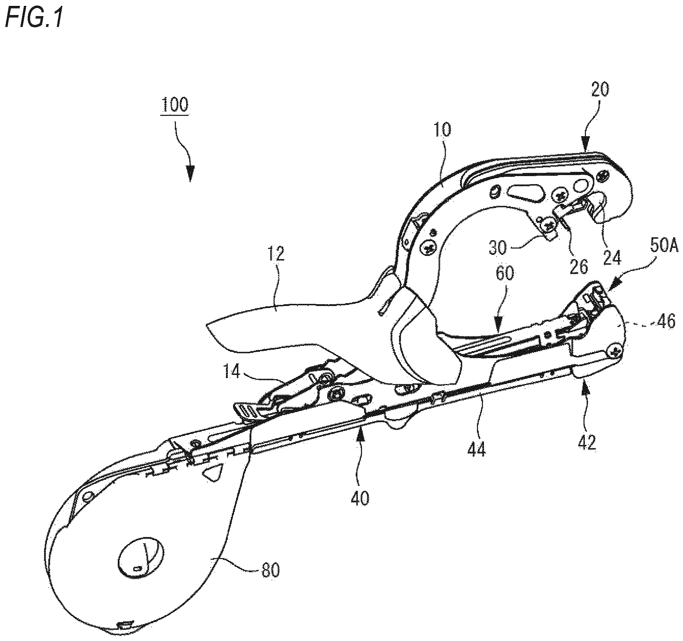

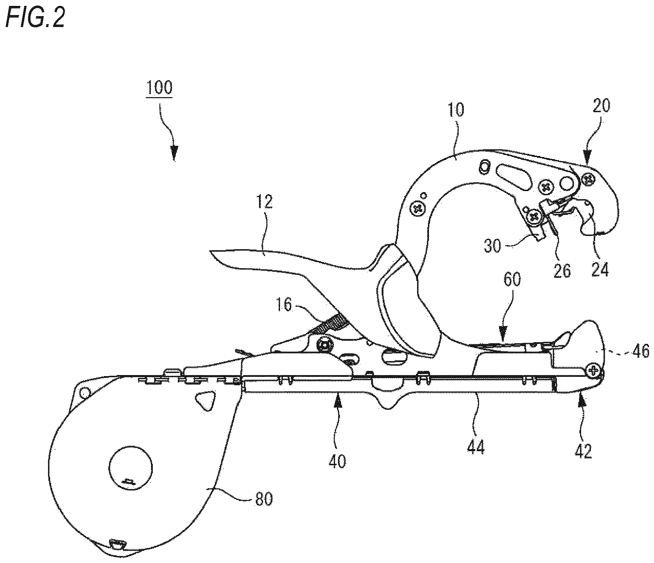

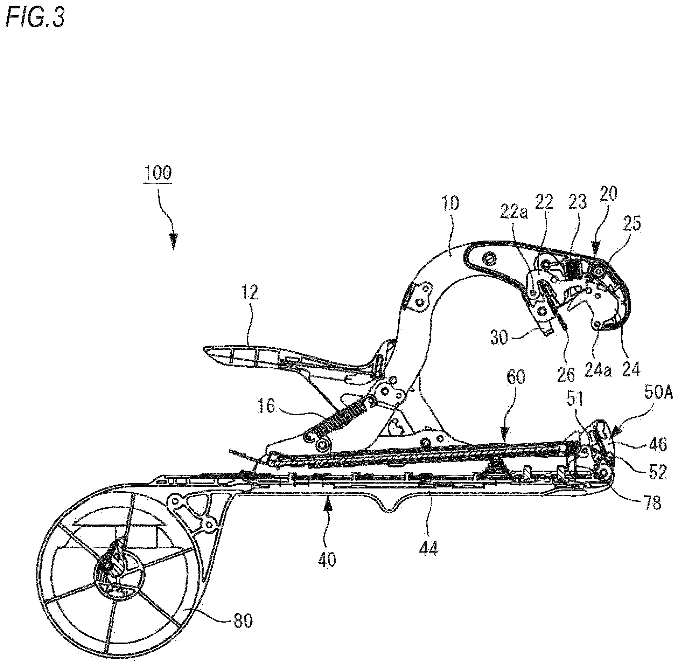

Fig. 1 is a perspective view illustrating an example of a configuration of a binding machine for gardening 100 according to a first embodiment, Fig. 2 is a front view thereof, and Fig. 3 is a cross-sectional view thereof. In Figs. 1 to 3, the right side of the sheet is set as a front side of the binding machine for gardening 100, and the left side of the sheet is set as a rear side of the binding machine for gardening 100.

As illustrated in Figs. 1 to 3, the binding machine for gardening 100 as a hand-held tool includes a clincher arm 10, a binding machine main body 40, a handle 12, a tape drawing portion 20, a tape transport portion 42, a tape cutting portion 50A, a staple magazine 60, and a tape magazine 80.

The rear end portion of the clincher arm 10 is rotatably attached to the binding machine main body 40 and is urged rearward by a tension spring 16. The handle 12 is a part to be grasped by the user, and a substantially middle portion thereof is rotatably attached to the clincher arm 10, and its front end portion is rotatably attached to the binding machine main body 40. With such a configuration, as the handle 12 is opened and closed, the clincher arm 10 opens and closes in accordance with the binding machine main body 40 by the lever principle of the handle 12.

The tape drawing portion 20 is a mechanism for drawing out the tape TP from the binding machine main body 40, and is provided at the front end portion of the clincher arm 10. The tape drawing portion 20 has a lock plate 22, a tape catch 24, and a tape plate 26.

The lock plate 22 is configured to be rotatable about a shaft 22a as a fulcrum provided at one end side, and the other end side thereof is urged toward the tape catch 24 side by a coil spring 23. The lock plate 22 locks the tape catch 24 by being engaged with the tape catch 24 by the urging force of the coil spring 23 and fixes the tape catch 24 at a position separated from the tape plate 26.

The tape catch 24 is provided to be rotatable about the shaft 24a as a fulcrum and is urged toward the tape plate 26 side by a torsion coil spring 25. When the lock of the lock plate 22 is released at the time of drawing out the tape, the leading end portion 24b having a tapered shape moves toward the tape plate 26 by the urging force of the torsion coil spring 25.

The tape plate 26 is disposed to face the tape catch 24, and its front end portion extends from the lock plate 22 to the binding machine main body 40. The tape TP is sandwiched between the extending portion of the tape plate 26 and the tape catch 24, and the tape TP is pulled upward from a tape guide 46 in accordance with the return (opening) operation of the clincher arm 10.

The tape transport portion 42 has a tape holder 44 and the tape guide 46. The tape holder 44 is a path for transporting the tape from the tape magazine 80 to the tape guide 46, and is laid along the longitudinal direction of the binding machine main body 40. Further, the tape holder 44 is configured to be openable and closable with one side in the longitudinal direction as a fulcrum, so that the setting operation of the tape TP can be easily performed. The tape guide 46 is rotatably provided at the front end portion of the binding machine main body 40 (tape holder 44), and holds the leading end portion of the tape in a state of being pulled upward from the tape guide 46.

The tape cutting portion 50A has a cutting blade 51 for cutting the tape TP, and a lock mechanism 52 for locking and unlocking the cutting blade 51. The cutting blade 51 is fixed to a predetermined position of the tape guide 46 by the lock mechanism 52 and can be pulled out from the tape guide 46 by releasing the lock mechanism 52. A configuration and function of the tape cutting portion 50A will be described below.

The staple magazine unit 60 is attached to the upper surface side of the binding machine main body 40, and the staples adhesively connected therebetween are loaded therein. the staple magazine unit 60 ejects the staple by the opening and closing operation of the clincher arm 10 and binds the overlapping portion of the tape TP.

The tape magazine 80 is attached to the rear end portion of the binding machine main body 40 and houses the tape roll around which the tape TP is wound. The tape magazine 80 rotates in the forward direction by the drawing operation of the tape TP based on the opening and closing operation of the clincher arm 10, and feeds the tape TP to the tape transport portion 42. The configuration and function of the tape magazine 80 will be described later.

### [Operation example of Binding machine for gardening 100]

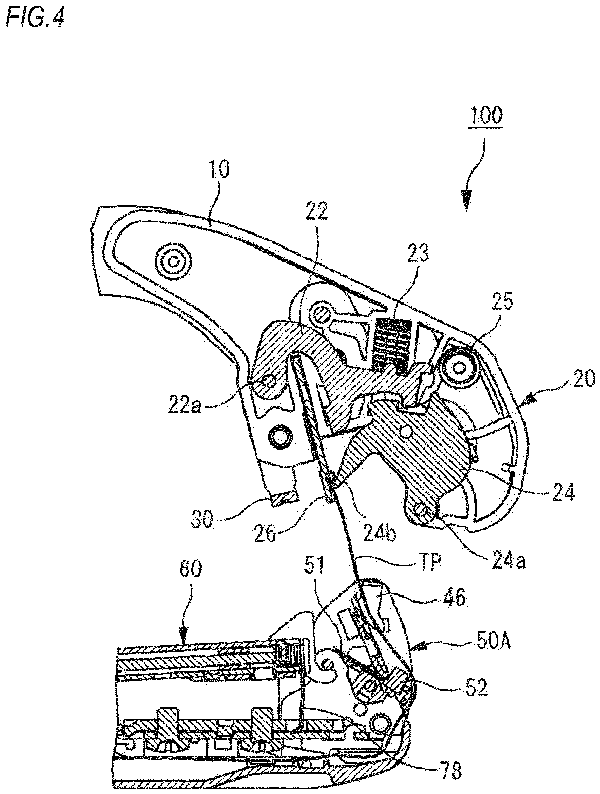

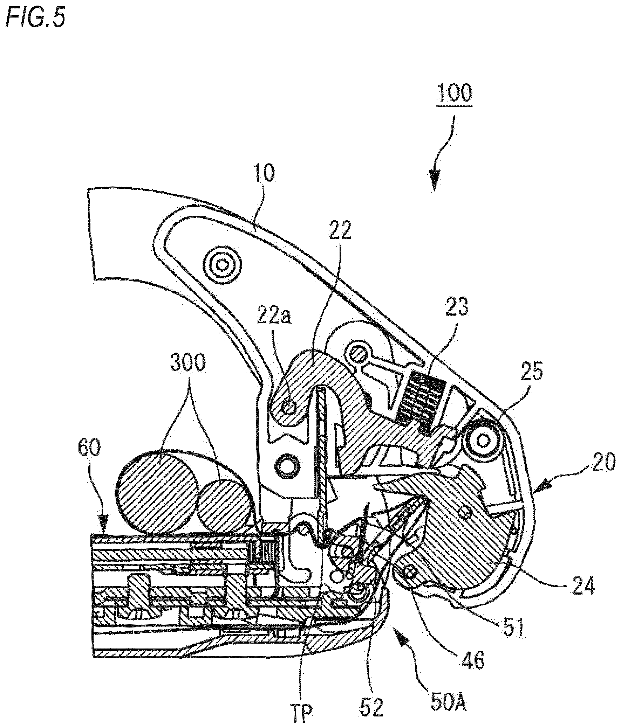

Next, an example of the operation at the time of binding processing of the binding machine for gardening 100 will be described. Fig. 4 is a cross-sectional view illustrating a state at the time of pulling out the tape TP in the binding machine for gardening 100. Fig. 5 is a cross-sectional view illustrating a state at the time of cutting the tape TP in the binding machine for gardening 100.

Referring to Figs. 1 to 5, when the handle 12 is gripped by the user, the clincher arm 10 moves (descends) in a direction of approaching the binding machine main body 40. As a result, the lock plate 22 abuts against the tape guide 46 on the side of the binding machine main body 40 and the lock plate 22 is pushed upward, and thus, the lock of the tape catch 24 by the lock plate 22 is released.

When the tape catch 24 is unlocked, the tape catch 24 rotates toward the tape plate 26 and the tape TP is pressed against the tape guide 46 by the leading end portion 24b of the tape catch 24.

Subsequently, when the user releases the grip of the handle 12, the clincher arm 10 moves (ascends) in a direction away from the binding machine main body 40. Accordingly, as illustrated in Fig. 4, the tape catch 24 is transferred from the tape guide 46 to the tape plate 26, and the tape TP is pulled upward from the tape guide 46 in a state of being sandwiched between the tape plate 26 and the tape catch 24. In addition, as the clincher arm 10 ascends, the lock plate 22 and the tape catch 24 are engaged with each other.

Subsequently, the tape TP is pressed against a branch or a support pillar of vegetables and the like (hereinafter, the branch and the support are collectively referred to as a bound article 300) by pushing out to the front of the binding machine main body 40, and the bound article 300 is taken into the clincher arm 10.

Subsequently, when the user strongly grasps the handle 12 again, the clincher arm 10 moves (descends) in a direction of approaching the binding machine main body 40, and the tape TP is wrapped around the bound article 300.

As the clincher arm 10 descends, the tape guide 46 moves along the opposing inclined surface of the tape catch 24, and when reaching the position where the movement is restricted, the tape catch 24 rotates in a direction away from the tape plate 26 (front side). Accordingly, the tape guide 46 also rotates to the front side.

With the rotation of the tape guide 46, as illustrated in Fig. 5, the cutting blade 51 also rotates, and a blade provided on the leading end portion side of the cutting blade 51 is thrust into the tape TP, so that the tape TP is cut. Further, as the clincher 30 presses the staple magazine main body 62, and the staple magazine main body 62 tilts about the rear end portion as a fulcrum, the driver 78 ejects the staple from the ejection port, and the overlapping portion of the tape TP is bound by the staple. In the present embodiment, the binding operation of the bound article 300 is performed by such a series of processes.

### [Configuration example of Tape cutting portion 50A]

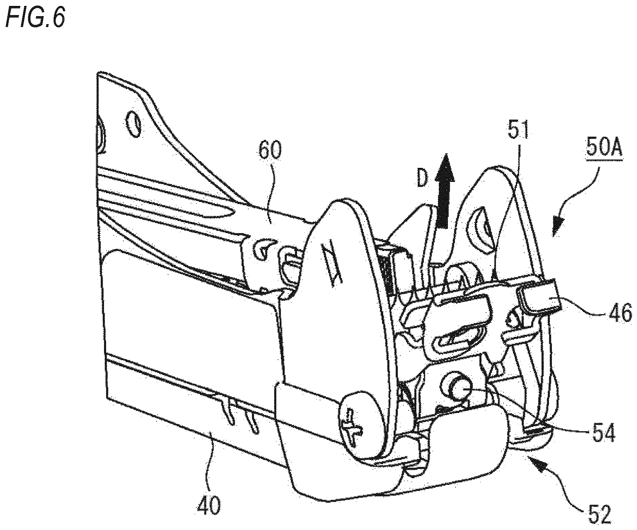

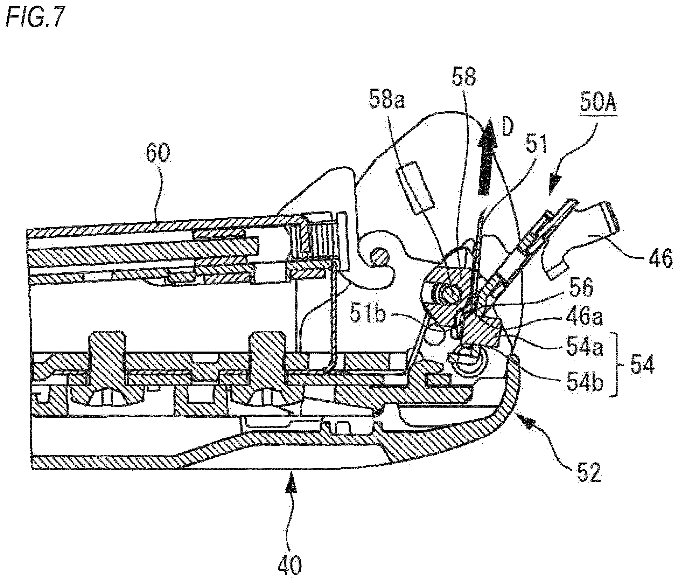

Fig. 6 is a perspective view illustrating an example of a configuration of the tape cutting portion 50A, and Fig. 7 is a cross-sectional view thereof. As illustrated in Figs. 6 and 7, the tape cutting portion 50A includes a cutting blade 51 and a lock mechanism 52.

First, the lock mechanism 52 will be described. The lock mechanism 52 is used to lock the cutting blade 51 at a predetermined position of the tape guide 46 or release the lock of the cutting blade 51. The lock mechanism 52 includes a release button 54, a coil spring 56, and a spring support member 58.

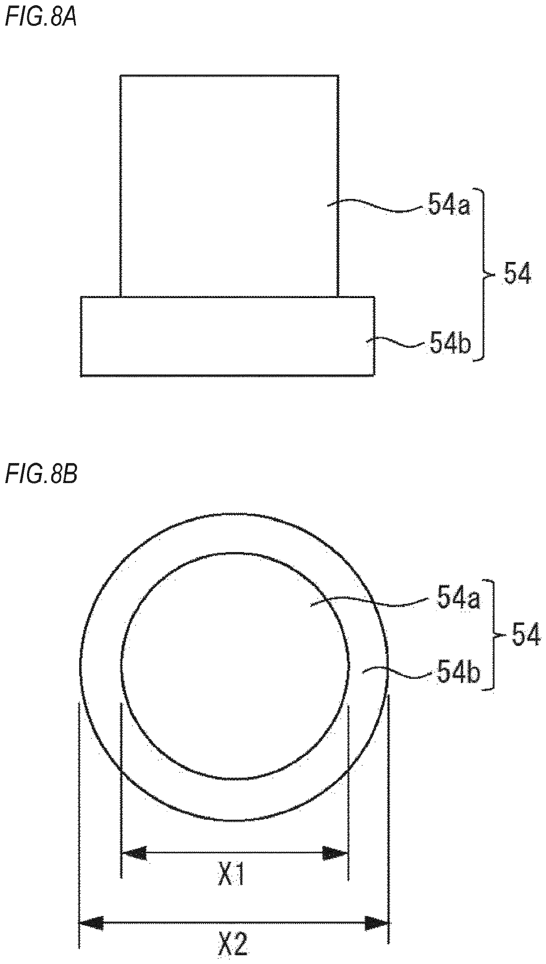

The release button 54 is disposed at a position (deviated position) not overlapping with a pulling-out direction D of the cutting blade 51, on a front surface of the tape guide 46 (see Figs. 6 and 7). Fig. 8A is a side view illustrating an example of a configuration of the release button 54, and Fig. 8B is a plan view thereof. As illustrated in Figs. 6, 7, 8A, and 8B, the release button 54 includes a cylindrical body 54a and an enlarged diameter portion 54b that is formed integrally with the cylindrical body 54a at a rear end portion (base end portion) thereof and has a diameter X2 larger than a diameter X1 of the cylindrical body 54a. The cylindrical body 54a of the release button 54 protrudes forward from a through hole 46a formed in the tape guide 46, and the enlarged diameter portion 54b of the release button 54 is locked by an opening peripheral edge of the through hole 46a. Thus, the release button 54 is prevented from coming off forward from the tape guide 46. The release button 54 corresponds to an example of an operation portion.

The spring support member 58 is used to support the coil spring 56, and is attached to the binding machine main body 40 on the rear side of the cutting blade 51. The spring support member 58 has a shaft 58a extending in a left-right direction of the binding machine main body 40. The coil spring 56 is attached to the shaft 58a.

The coil spring 56 is made up of a so-called double torsion spring in which two torsion coil springs are connected to each other. The coil spring 56 abuts against the enlarged diameter portion 54b of the release button 54 to urge the release button 54 toward the front side, and elastically supports the coil spring 56 in a state where the release button 54protrudes forward from the tape guide 46. In the embodiment, the coil spring 56 is used as an urging unit of the release button 54, but an elastic member such as a leaf spring or a compression spring may be used without being limited thereto.

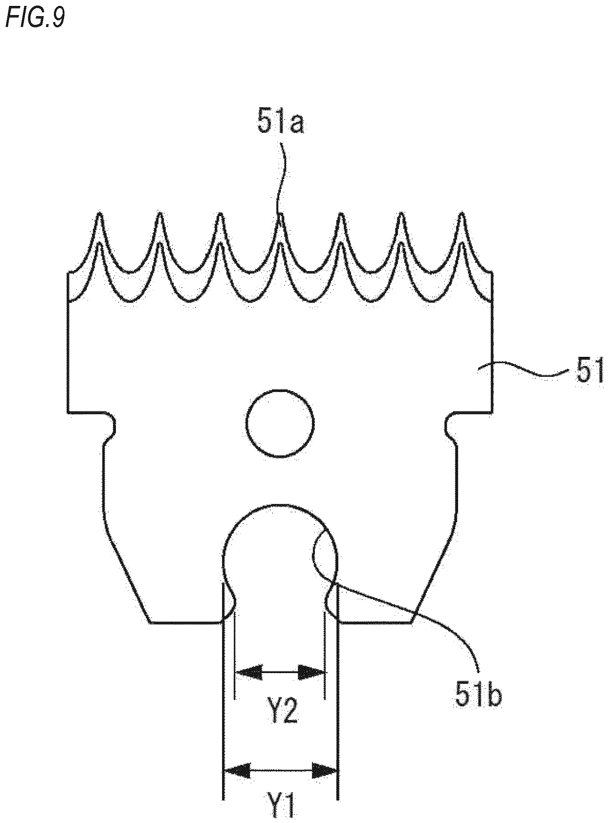

The cutting blade 51 will be described below. Fig. 9 illustrates an example of a configuration of the cutting blade 51. As illustrated in Fig. 9, the cutting blade 51 includes saw-shaped teeth 51a formed at a front end portion thereof and a recessed portion 51b formed at a base end portion. The recessed portion 51b is cut out in a substantially circular shape corresponding to the shape of the release button 54. An entrance width (minimum width) Y1 of the recessed portion 51b is selected to be substantially equal to the diameter X2 of the enlarged diameter portion 54b of the release button 54. A maximum width Y2 of the recessed portion 51b is selected to be larger than the diameter X1 of the cylindrical body 54a of the release button 54.

### [Operation example of Tape cutting portion 50A]

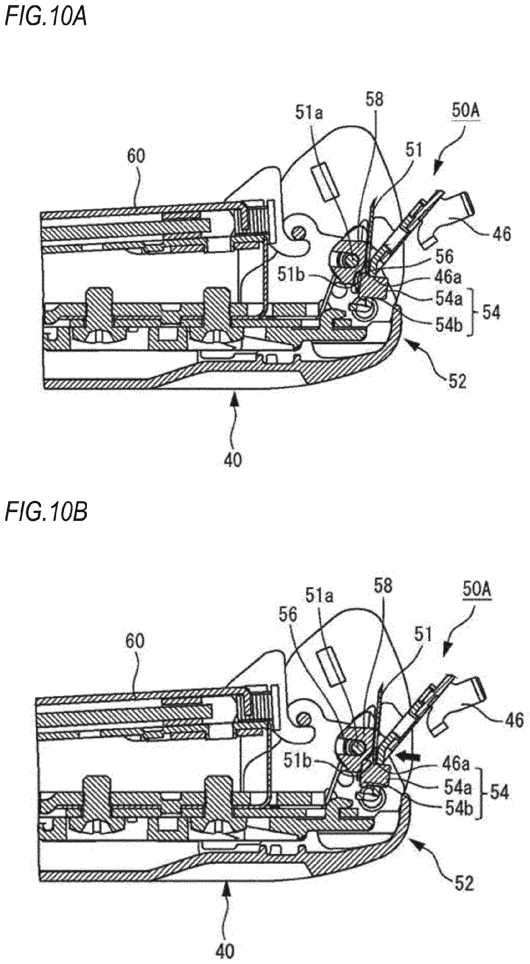

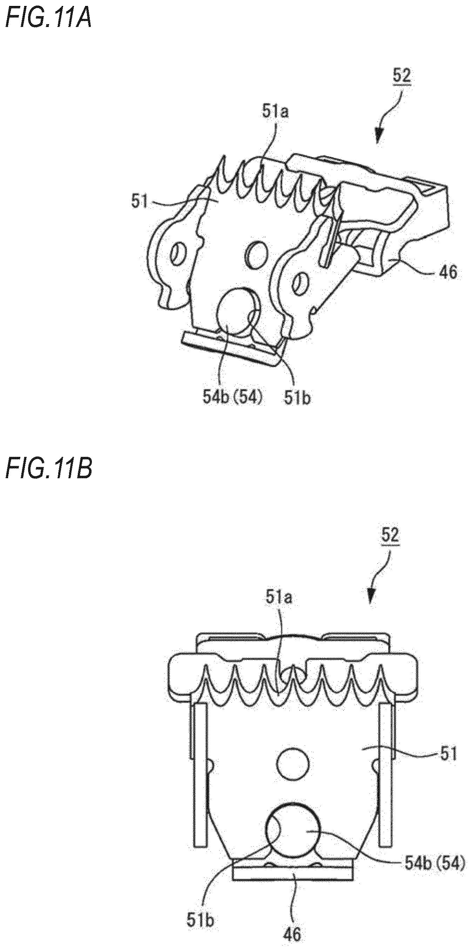

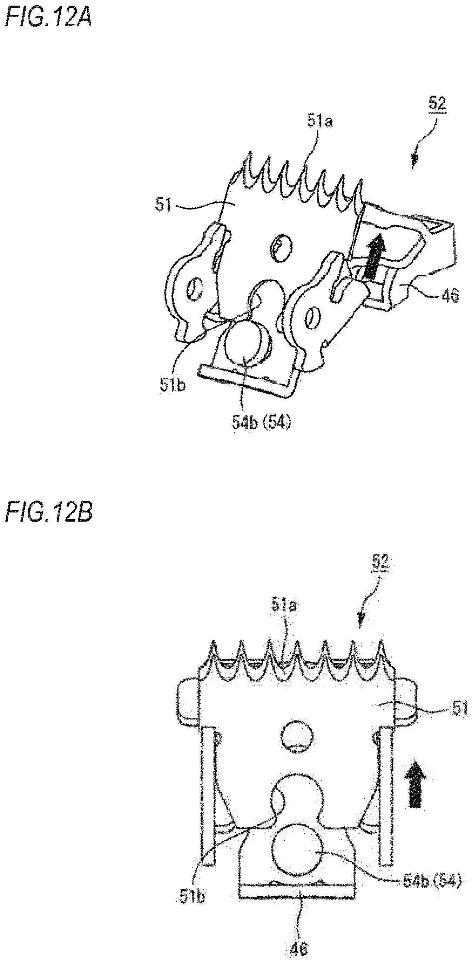

Fig. 10A is a perspective view illustrating a state of the lock mechanism 52 when the release button 54 is not pressed, and Fig. 10B is a perspective view illustrating a state of the lock mechanism 52 when the release button 54 is pressed. Fig. 11A is a perspective view illustrating a state of the lock mechanism 52 when the release button 54 is not pressed, as viewed from the rear side, and Fig. 11B is a plan view thereof. Fig. 12A is a perspective view illustrating a state of the lock mechanism 52 when the lock is released and the cutting blade 51 is pulled out, as viewed from the rear side, and Fig. 12B is a plan view thereof.

As illustrated in Figs. 10A, 11A, and 11B, since the enlarged diameter portion 54b of the release button 54 is positioned in the recessed portion 51b of the cutting blade 51 in the state where the release button 54 is not pressed, the recessed portion 51b of the cutting blade 51 is hooked (locked) to the enlarged diameter portion 54b of the release button 54. Thereby, the cutting blade 51 is locked at the optimum position in the tape guide 46.

As illustrated in Figs. 10B, 12A, and 12B, when a user presses down the release button 54, the release button 54 moves rearward against the urging force of the coil spring 56. Thus, the cylindrical body 54a, having the diameter X1 smaller than the width Y2 of the recessed portion 51b, of the release button 54 is positioned in the recessed portion 51b of the cutting blade 51, whereby the cutting blade 51 locked by the release button 54 is released. In this state, when the cutting blade 51 is pulled outward, the recessed portion 51b of the cutting blade 51 can slip through the release button 54, and the cutting blade 51 can be pulled out from the binding machine main body 40.

As described above, according to the first embodiment, since the release button 54 of the lock mechanism 52 is provided on the front side of the tape guide 46, the user can replace the cutting blade 51 while observing the release button 54. This makes it possible to efficiently replace the cutting blade 51. Further, since the release button 54 is formed at a position deviating from the pulling-out direction D of the cutting blade 51, it is possible to avoid that the user's finger pressing the release button 54 is positioned in the pulling-out direction D of the cutting blade 51, and to prevent the cutting blade 51 from coming in contact with the user's finger.

Further, according to the first embodiment, since the cutting blade 51 is locked by the release button 54 which is positioned in advance, it is possible to reliably perform positioning when the cutting blade 51 is mounted. In addition, it is possible to install the cutting blade 51 at an optimum position where the tape can be efficiently cut. This makes it possible to cut the tape accurately and reliably.

Furthermore, according to the first embodiment, since the cutting blade 51 is locked by the release button 54, as compared with the case where the cutting blade 51 is sandwiched and held by the leaf spring or the sheet metal member as in the related art, it is possible to prevent the cutting blade 51 from coming off unintentionally. For example, even when stems or support pillars are erroneously pierced by the cutting blade 51 at the time of binding, it is possible to reliably prevent the cutting blade 51 from coming off from the binding machine main body 40.

### <Second Embodiment>

In a second embodiment, which is not covered by the appended claims, a lock mechanism 52 has a configuration different from that of the first embodiment. Except for the lock mechanism 52, the binding machine for gardening 100 has the same configuration and operation as in the first embodiment. Therefore, the same components are denoted by the same reference numerals, and the detailed description thereof will be omitted.

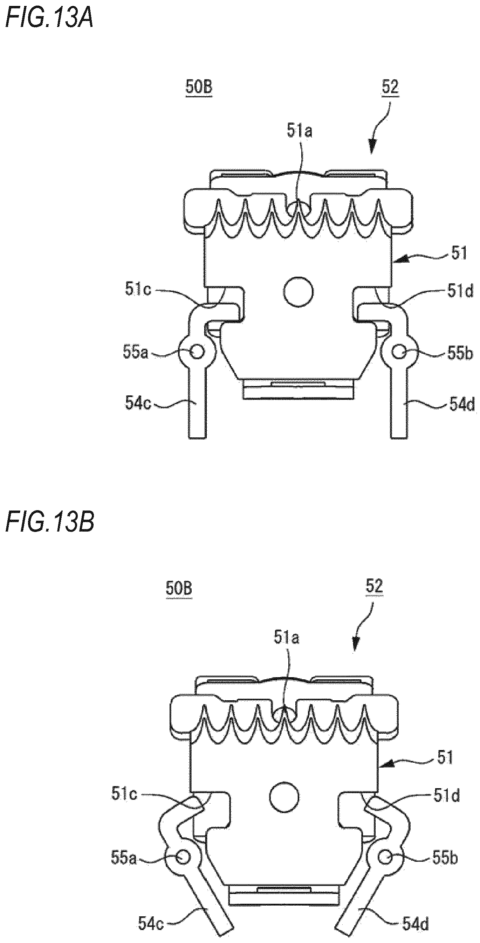

Figs. 13A and 13B illustrate examples of a configuration of a tape cutting portion 50B. Fig. 13A is a view illustrating a state where a cutting blade 51 is locked by the lock mechanism 52, and Fig. 13B is a view illustrating a state where the cutting blade 51 locked by the lock mechanism 52 is released.

As illustrated in Figs. 13A and 13B, the tape cutting portion 50B includes the cutting blade 51 and the lock mechanism 52. The cutting blade 51 includes not only teeth 51a that are formed at a front end portion but also recessed portions 51c and 51d that are cut out in a substantially U shape on side surfaces, respectively.

The lock mechanism 52 has release arms 54c and 54d for locking and unlocking the cutting blade 51. Each of the release arms 54c and 54d corresponds to an example of an operation portion.

The release arm 54c is formed of a substantially L-shaped bar member including a short side and a long side, and is configured to be rotatable around a central part thereof. The release arm 54c is urged toward the recessed portion 51c by an elastic member 55a such as a coil spring, and the short side of the release arm 54c is engaged with the recessed portion 51c. An end portion of the long side of the release arm 54c functions as an operation portion to be operated by the user, and is provided to protrude from the tape guide 46 for easy operation.

Similarly, the release arm 54d is formed of a substantially L-shaped bar member including a short side and a long side, and is configured to be rotatable around a central part thereof. The release arm 54d is urged toward the recessed portion 51d by an elastic member 55b, and the short side of the release arm 54d is engaged with the recessed portion 51d. An end portion of the long side of the release arm 54d functions as an operation portion to be operated by the user, and is provided to protrude from the tape guide 46 for easy operation.

Next, an example of the operation of the lock mechanism 52 when the cutting blade 51 is unlocked will be described with reference to Figs. 13A and 13B.

As illustrated in Fig. 13A, when the cutting blade 51 is not pulled out, that is, when the release arms 54c and 54d are not operated, the short sides of the release arms 54c and 54d are engaged with the recessed portions 51c and 51 d of the cutting blade 51, respectively, and thus the cutting blade 51 is locked at a predetermined position in the tape guide 46.

As illustrated in Fig. 13B, when the long sides of the release arms 54c and 54d are operated by the user in a case where the cutting blade 51 is pulled out, the short sides of the release arms 54c and 54d rotate outward against an urging force of the elastic members 55a and 55b. Thus, each of the release arms 54c and 54d is separated from each of the recessed portions 51c and 51 d of the cutting blade 51, and the cutting blade 51 locked by the release arms 54c and 54d is released. As a result, the cutting blade 51 can be pulled out.

As described above, according to the second embodiment, the same operational effect as in the first embodiment described above can be achieved. That is, according to the second embodiment, since the release arms 54c and 54d of the lock mechanism 52 are provided on the front side of the tape guide 46, the user can replace the cutting blade 51 while observing the release arms 54c and 54d. This makes it possible to efficiently replace the cutting blade 51. Further, since the release arms 54c and 54d are formed at a position deviating from the pulling-out direction D of the cutting blade 51, it is possible to avoid that the user's finger pressing the release arms 54c and 54d is positioned in the pulling-out direction D of the cutting blade 51, and to prevent the cutting blade 51 from coming in contact with the user's finger.

Further, according to the second embodiment, since the cutting blade 51 is locked by the release arms 54c and 54d which are positioned in advance, it is possible to reliably perform positioning when the cutting blade 51 is mounted. In addition, it is possible to install the cutting blade 51 at an optimum position where the tape can be efficiently cut. This makes it possible to cut the tape accurately and reliably.

Furthermore, according to the second embodiment, since the cutting blade 51 is locked by the release arms 54c and 54d, as compared with the case where the cutting blade 51 is sandwiched and held by the leaf spring or the sheet metal member as in the related art, it is possible to prevent the cutting blade 51 from coming off unintentionally. For example, even when stems or support pillars are erroneously pierced by the cutting blade 51 at the time of binding, it is possible to reliably prevent the cutting blade 51 from coming off from the binding machine main body 40.

Although the invention is described with reference to the embodiments, the technical scope of the invention is not limited to the scope described in the above embodiments. The invention is defined by the scope of the appended claims. For example, the release button 54 or the release arms 54c and 54d are adopted as the lock mechanism 52 in the above-described embodiment, but another known lock mechanism may be adopted without being limited thereto.

## Claims

1. A binding machine (100) for gardening comprising:
a binding machine main body (40);
a clincher arm (10) that is rotatably attached to the binding machine main body (40) and that is configured to draw a tape (TB) out of the binding machine main body (40) and to bind an object (300) to be bound which is wound by the tape (TB); and
a cutting portion (50A) that is configured to cut the tape (TB) to be bound by the clincher arm (10), wherein
the cutting portion (50A) includes:
a blade (51) that is configured to cut the tape (TB); and
a lock mechanism (52) that is configured to fix the blade (51) at a predetermined position of the binding machine main body (40),
the lock mechanism (52) has an operation portion (54, 54a, 54b) configured to lock and unlock the blade (51) to and from the binding machine main body (40),
**characterized in that**
the operation portion (54, 54a, 54b) is formed by a release button (54), the release button including an enlarged diameter portion (54b),
the blade (51) includes a saw-shaped teeth (51a) formed at a front end portion thereof and a recessed portion (51b) formed at a base end portion,
wherein the lock mechanism (52) further comprises an elastic member (56) configured to urge the release button (54); and
an elastic member support member (58),
wherein the release button (54) is urged by the elastic member (56) and the enlarged diameter portion (54b) of the release button (54) is positioned in the recessed portion (51b) of the blade (51) such that the recessed portion (51b) is hooked to the enlarged diameter portion (54b) of the release button, so that the blade (50) is locked.

2. The binding machine (100) for gardening according to claim 1, wherein
the release button (54) is provided at a position not overlapping with a pulling-out direction of the blade (51).

3. The binding machine (100) for gardening according to claim 2, wherein
the release button (54) is provided at a front-end portion of the binding machine main body (40).

4. The binding machine (100) for gardening according to any one of claims 1 to 3, further comprising:
a guide portion (46) that is provided at a front part of the binding machine main body (40) and guides the tape (TB),
wherein the blade (51) is locked to the guide portion (46) by the lock mechanism (52).

5. The binding machine (100) for gardening according to claim 4, wherein
the blade (51) can be pulled out from the guide portion (46) by releasing the lock mechanism (52).

6. The binding machine (100) for gardening according to claim 1, wherein the elastic member is a coil spring (56) supported by the spring support member (58), that is attached to the binding machine main body (40) on the rear side of the blade (51).

7. The binding machine (100) for gardening according to any one of claims 1 or 6, wherein the recessed portion (51b) is cut out in a substantially circular shape corresponding to the shape of the release button (54).

## Patentansprüche

1. Bindemaschine (100) für den Gartenbau, umfassend:
einen Bindemaschinenhauptkörper (40);
einen Klammerarm (10), der rotierbar am Bindemaschinenhauptkörper (40) befestigt ist und der konfiguriert ist, um ein Band (TB) aus dem Bindemaschinenhauptkörper (40) zu ziehen und ein zu bindendes Objekt (300) zu binden, das von dem Band (TB) umwickelt ist; und
einen Schneidabschnitt (50A), der konfiguriert ist, um das Band (TB), das durch den Klammerarm (10) gebunden werden soll, zu schneiden, wobei
der Schneidabschnitt (50A) enthält:
eine Klinge (51), die konfiguriert ist, um das Band (TB) zu schneiden; und
einen Verriegelungsmechanismus (52), der konfiguriert ist, um die Klinge (51) in einer vorbestimmten Position des Bindemaschinenhauptkörpers (40) zu fixieren,
wobei der Verriegelungsmechanismus (52) einen Betätigungsabschnitt (54, 54a, 54b) aufweist, der konfiguriert ist, um die Klinge (51) an dem Bindemaschinenhauptkörper (40) zu verriegeln und von dem Bindemaschinenhauptkörper zu entriegeln,
**dadurch gekennzeichnet, dass**
der Betätigungsabschnitt (54, 54a, 54b) durch einen Auslöseknopf (54) gebildet ist, wobei der Auslöseknopf einen Abschnitt (54b) mit vergrößertem Durchmesser aufweist,
wobei die Klinge (51) einen sägeförmigen Zahn (51a), der an einem vorderen Endabschnitt davon ausgebildet ist, und einen vertieften Abschnitt (51b), der an einem Basisendabschnitt ausgebildet ist, enthält,
wobei der Verriegelungsmechanismus (52) ferner ein elastisches Element (56), das so konfiguriert ist, dass es den Auslöseknopf (54) drückt; und
ein das elastische Element stützendes Element (58) umfasst,
wobei der Auslöseknopf (54) durch das elastische Element (56) gedrückt wird und der Abschnitt (54b) mit vergrößertem Durchmesser des Auslöseknopfes (54) in dem vertieften Abschnitt (51b) der Klinge (51) positioniert ist, so dass der vertiefte Abschnitt (51b) an dem Abschnitt (54b) mit vergrößertem Durchmesser des Auslöseknopfes eingehakt ist, so dass die Klinge (50) verriegelt ist.

2. Bindemaschine (100) für den Gartenbau nach Anspruch 1, bei der
der Betätigungsabschnitt (54) an einer Position vorgesehen ist, die sich nicht mit einer Auszugsrichtung der Klinge (51) überlappt.

3. Bindemaschine (100) für den Gartenbau nach Anspruch 2, bei der
der Betätigungsabschnitt (54) an einem vorderen Endabschnitt des Bindemaschinenhauptkörpers (40) vorgesehen ist.

4. Bindemaschine (100) für den Gartenbau nach einem der Ansprüche 1 bis 3, ferner umfassend:
einen Führungsabschnitt (46), der an einem vorderen Teil des Bindemaschinenhauptkörpers (40) vorgesehen ist und der das Band (TB) führt,
wobei die Klinge (51) durch den Verriegelungsmechanismus (52) an dem Führungsabschnitt (46) verriegelt ist.

5. Bindemaschine (100) für den Gartenbau nach Anspruch 4, bei der
die Klinge (51) aus dem Führungsabschnitt (46) herausgezogen werden kann, indem der Veniegelungsmechanismus (52) gelöst wird.

6. Bindemaschine (100) für den Gartenbau nach Anspruch 1, wobei das elastische Element eine Schraubenfeder (56) ist, die von dem Federstützelement (58) getragen wird, das an der Rückseite der Klinge (51) an dem Bindemaschinenhauptkörper (40) angebracht ist.

7. Bindemaschine (100) für den Gartenbau nach einem der Ansprüche 1 oder 6, wobei der vertiefte Abschnitt (51b) in einer im Wesentlichen kreisförmigen Form, die der Form des Auslöseknopfes (54) entspricht, ausgeschnitten ist.

## Revendications

1. Machine de liaison (100) pour jardinage comprenant :
un corps principal de machine de liaison (40) ;
un bras d'accrochage (10) qui est attaché de manière rotative au corps principal de machine de liaison (40) et qui est configuré pour tirer une bande (TB) hors du corps principal de machine de liaison (40) et pour lier un objet (300) à lier qui est enroulé par la bande (TB) ; et
une portion de coupe (50A) qui est configurée pour couper la bande (TB) à lier par le bras d'accrochage (10), dans laquelle
la portion de coupe (50A) comporte :
une lame (51) qui est configurée pour couper la bande (TB) ; et
un mécanisme de verrouillage (52) qui est configuré pour fixer la lame (51) au niveau d'une position prédéterminée du corps principal de machine de liaison (40),
le mécanisme de verrouillage (52) a une portion d'actionnement (54, 54a, 54b) configurée pour verrouiller et déverrouiller la lame (51) vers et depuis le corps principal de machine de liaison (40),
**caractérisée en ce que**
la portion d'actionnement (54, 54a, 54b) est formée par un bouton de libération (54), le bouton de libération comportant une portion à diamètre élargi (54b),
la lame (51) comporte des dents en forme de scie (51a) formées au niveau d'une portion d'extrémité avant de celle-ci et une portion en creux (51b) formée au niveau d'une portion d'extrémité de base,
dans laquelle le mécanisme de verrouillage (52) comprend en outre un élément élastique (56) configuré pour solliciter le bouton de libération (54) ; et
un élément de support d'élément élastique (58),
dans laquelle le bouton de libération (54) est sollicité par l'élément élastique (56) et la portion à diamètre élargi (54b) du bouton de libération (54) est positionnée dans la portion en creux (51b) de la lame (51) de sorte que la portion en creux (51b) soit accrochée à la portion à diamètre élargi (54b) du bouton de libération, de sorte que la lame (50) soit verrouillée.

2. Machine de liaison (100) pour jardinage selon la revendication 1, dans laquelle
le bouton de libération (54) est prévu au niveau d'une position ne se chevauchant pas avec une direction d'extraction de la lame (51).

3. Machine de liaison (100) pour jardinage selon la revendication 2, dans laquelle
le bouton de libération (54) est prévu au niveau d'une portion d'extrémité avant du corps principal de machine de liaison (40).

4. Machine de liaison (100) pour jardinage selon l'une quelconque des revendications 1 à 3, comprenant en outre :
une portion guide (46) qui est prévue au niveau d'une partie avant du corps principal de machine de liaison (40) et guide la bande (TB),
dans laquelle la lame (51) est verrouillée sur la portion guide (46) par le mécanisme de verrouillage (52).

5. Machine de liaison (100) pour jardinage selon la revendication 4, dans laquelle
la lame (51) peut être extraite de la portion guide (46) en libérant le mécanisme de verrouillage (52).

6. Machine de liaison (100) pour jardinage selon la revendication 1, dans laquelle l'élément élastique est un ressort hélicoïdal (56) supporté par l'élément de support de ressort (58), qui est attaché au corps principal de machine de liaison (40) sur le côté arrière de la lame (51).

7. Machine de liaison (100) pour jardinage selon l'une quelconque des revendications 1 ou 6, dans laquelle
la portion en creux (51b) est coupée selon une forme sensiblement circulaire correspondant à la forme du bouton de libération (54).
